# EUROPÄISCHE PATENTSCHRIFT

(11) **EP 4 155 591 B1**
(45) Veröffentlichungstag und Bekanntmachung des Hinweises auf die Patenterteilung: **06.08.2025**
(21) Anmeldenummer: 22193357.5
(22) Anmeldetag: 01.09.2022
(51) Int. Cl.: F16K 27/02, F16K 31/122, F16K 31/126, F16K 37/00

(54) **ANTRIEBSEINHEIT UND PROZESSVENTIL**
DRIVE UNIT AND PROCESS VALVE
UNITÉ D'ENTRAÎNEMENT ET SOUPAPE DE PROCESSUS

(30) Priorität: 22.09.2021 DE 102021124468
(43) Veröffentlichungstag der Anmeldung: 29.03.2023
(73) Patentinhaber: GEMÜ Gebr. Müller Apparatebau GmbH & Co. Kommanditgesellschaft, 74653 Ingelfingen (DE)
(72) Erfinder: Matter, Simon, 74747 Ravenstein (DE); Bitter, Philipp, 73342 Gosbach (DE); Knoche, Sebastian, 74613 Öhringen (DE); Falkenberger, Christian, 97980 Bad Mergentheim (DE); Falkenberger, Jochen, 97980 Bad Mergentheim (DE)
(74) Vertreter: DREISS Patentanwälte PartG mbB

(56) Entgegenhaltungen:
- EP-A1- 2 775 178
- DE-A1- 102007 055 460
- GB-A- 2 388 889
- US-A1- 2019 257 440

## Beschreibung

Die Beschreibung betrifft Fortschritte im Bereich der Prozessventiltechnik, insbesondere für Zubehör für Antriebseinheiten von Prozessventilen.

Aus der DE 10 2007 055 460 A1 ist ein Ventilblock und ein Verbraucher offenbart, wobei der Ventilblock mittels Hohlschrauben mit dem Verbraucher verbunden ist.

Die Probleme des Standes der Technik werden durch eine Antriebseinheit gemäß dem Anspruch 1 und durch ein Prozessventil gemäß einem weiteren Anspruch gelöst.

Ein erster Aspekt der Beschreibung betrifft eine Antriebseinheit für ein Prozessventil. Diese Antriebseinheit umfasst ein Antriebsgehäuse mit wenigstens einem Steuermedium-Anschluss. Wenigstens ein Adapter ist zumindest abschnittsweise in einem Zubehörgehäuse angeordnet. Der wenigstens eine Adapter umfasst einen ersten Steuermedium-Anschluss, der mit dem wenigstens einen Steuermedium-Anschluss des Antriebsgehäuses verbunden ist. Der wenigstens eine Adapter umfasst einen zweiten Steuermedium-Anschluss, der von außerhalb des Zubehörgehäuses zugänglich ist. Der wenigstens eine Adapter legt das Zubehörgehäuse zu dem Antriebsgehäuse fest.

Neben der Bereitstellung des zweiten Steuermedium-Anschlusses zum Anschluss einer Steuermedium-Leitung stellt der wenigstens eine Adapter vorteilhaft eine Befestigungsfunktion für das Zubehörgehäuse bereit. Auf zusätzliche Befestigungselemente für das Zubehörgehäuse kann aufgrund des wenigstens einen Adapters verzichtet werden. Somit wird die Abreinigbarkeit der Antriebseinheit verbessert. Zusätzlich wird die Montagezeit für sonst nötige Befestigungselemente eingespart. Für in dem Zubehörgehäuse evtl. vorgesehenes Ventilanschaltungs- und Stellungsregelungszubehör wird eine externe Leitungsführung nicht mehr benötigt. Damit entfällt eine Manipulationsmöglichkeit und die Zugänglichkeit wird verbessert.

Des Weiteren kann für eine Antriebsgröße die Variantenvielfalt dahingehen begrenzt werden, als dass durch die einheitliche Schnittstelle zwischen Antriebsgehäuse und Zubehörgehäuse lediglich eine Größe für das Zubehörgehäuse vorgehalten werden muss. Es wird also ein modulares Zubehörsystem für pneumatische Ventilantriebe geschaffen. Gleichzeitig wird der Montageaufwand reduziert.

Ein vorteilhaftes Beispiel zeichnet sich dadurch aus, dass das Antriebsgehäuse eine Öffnung umfasst, durch welche eine entlang einer Antriebsachse bewegliche Antriebsstange oder deren Verlängerung hindurchtritt, und wobei in dem Zubehörgehäuse ein Positionssensor angeordnet ist, dessen Sensorsignal eine Ist-Position der Antriebsstange charakterisiert.

Vorteilhaft wird über das Sensorsignal die Ventilstellung ermittelt und bereitgestellt.

Ein vorteilhaftes Beispiel zeichnet sich dadurch aus, dass das Zubehörgehäuse eine zentrale Öffnung, welche mittels einer Verschlusskappe verschließbar ist und/oder durch welche eine Hubbegrenzung, welche an dem Antriebsgehäuse angreift, anordenbar ist, umfasst.

Vorteilhaft kann somit eine optische Inspektion stattfinden oder aber eine Hubbegrenzung angeordnet werden.

Ein vorteilhaftes Beispiel zeichnet sich dadurch aus, dass der wenigstens eine Adapter einen Steuermedium-Kanal umfasst, der den ersten und den zweiten Steuermedium-Anschlussmiteinander verbindet.

Vorteilhaft führt der Steuermedium-Kanal direkt zu dem Steuermedium-Anschluss des Antriebsgehäuses.

Ein vorteilhaftes Beispiel zeichnet sich dadurch aus, dass der wenigstes eine Adapter einen Steuermedium-Kanal umfasst, der den ersten und den zweiten Steuermedium-Anschluss miteinander verbindet, und dass der wenigstens eine Adapter einen Mess-Abgriff entlang des Steuermedium-Kanals umfasst.

Vorteilhaft kann damit eine Messung des Druckes innerhalb des Zubehörgehäuses stattfinden.

Ein vorteilhaftes Beispiel zeichnet sich dadurch aus, dass ein Drucksensor in dem Zubehörgehäuse angeordnet ist,

welcher fluidführend mit dem Mess-Abgriff verbunden ist und dessen Sensorsignal einen Druck des Steuer-Mediums in dem Steuermedium-Kanal des Adapters repräsentiert.

Vorteilhaft ist die Druckmessung in dem Zubehörgehäuse integriert. Weiteres Zubehör zur Druckmessung kann entfallen.

Ein vorteilhaftes Beispiel zeichnet sich dadurch aus, dass der wenigstens eine Adapter eine erste Steuermedium-Kammer, welche mit dem ersten Steuermedium-Anschluss und mit einem lateralen ersten Steuer-Abgriff verbunden ist, und eine zweite Steuermedium-Kammer, welche mit dem zweiten Steuermedium-Anschluss und einem lateralen zweiten Steuer-Abgriff verbunden ist, umfasst.

Damit erfolgt eine Beeinflussung des Steuerdrucks innerhalb des Zubehörgehäuses.

Ein vorteilhaftes Beispiel zeichnet sich dadurch aus, dass eine in dem Zubehörgehäuse angeordnete Stelleinrichtung, insbesondere ein Vorsteuerventil, in Abhängigkeit von einem Stellsignal einen Fluss des Steuermediums zwischen dem ersten und zweiten Steuer-Abgriff begrenzt.

Vorteilhaft ist die Stelleinrichtung im Zubehörgehäuse integriert und kann die Steuer-Abgriffe zur Ventilansteuerung nutzen.

Ein vorteilhaftes Beispiel zeichnet sich dadurch aus, dass eine in dem Zubehörgehäuse angeordnete Regeleinrichtung dazu eingerichtet ist, das Stellsignal in Abhängigkeit von der Ist-Position der Antriebsstange und in Abhängigkeit von einer Soll-Position zu ermitteln.

Vorteilhaft ist die Regelfunktion für die Ventilstellung in dem Zubehörgehäuse integriert.

Ein vorteilhaftes Beispiel zeichnet sich dadurch aus, dass eine innerhalb des Zubehörgehäuses angeordnete Aufnahme den wenigstens eine Adapter zumindest abschnittsweise umgibt, und wobei Dichtelemente und die Aufnahme mit dem wenigstens einen Adapter wenigstens eine Kammer begrenzen, in welche der Mess-Abgriff oder ein jeweiliger der Steuer-Abgriffe führt.

Vorteilhaft ist insbesondere bei einer Gewindeausführung der Steuermedium-Anschlüsse, dass der Adapter eine beliebige Drehposition einnehmen kann, ohne dass die Führung des Steuermediums aus dem Adapter heraus beeinträchtigt wird.

Ein vorteilhaftes Beispiel zeichnet sich dadurch aus, dass an dem Zubehörgehäuse eine elektronische Stellungsanzeige, beispielsweise umfassend ein Display, eine Halbleiterlichtquelle oder eine Mehrzahl von Halbleiterlichtquellen, angeordnet ist, welche die Ist-Position der Antriebsstange anzeigt.

Wartungspersonal kann somit unmittelbar am Prozessventil erkennen, in welcher Ventilstellung sich dieses befindet.

Ein vorteilhaftes Beispiel zeichnet sich dadurch aus, dass das Zubehörgehäuse distal an dem Antriebsgehäuse angeordnet ist.

Vorteilhaft kann die Sensorik zur Ermittlung der Ist-Position der Antriebsstange in das Zubehörgehäuse integriert werden. Gleichzeitig wird lateral Bauraum eingespart.

Ein vorteilhaftes Beispiel zeichnet sich dadurch aus, dass eine Außenkontur des Zubehörgehäuses einer gedachten Verlängerung des Antriebsgehäuses oder dessen Formgebung parallel zur Antriebsachse im Wesentlichen folgt.

Zwar wird die Bauhöhe entlang der Antriebsachse vergrößert, dafür werden aber vom Antrieb abragende Anbauten vermieden oder reduziert. Dadurch ergibt sich nicht nur ein formschöneres Erscheinungsbild. Vielmehr verbessert sich so die Abreinigbarkeit der Antriebseinheit, was insbesondere in hochreinen Umgebungen von Vorteil ist.

Ein vorteilhaftes Beispiel zeichnet sich dadurch aus, dass die wenigstens zwei Adapterelemente umfasst.

Die Adapterelemente können selbstverständlich unterschiedlich ausgebildet sein, sich also konstruktiv voneinander unterscheiden. Durch die beiden Adapterelemente verbessert sich die Befestigung des Zubehörgehäuses an dem Antriebsgehäuse, da wenigstens zwei Befestigungspunkte bereitgestellt werden.

Ein zweiter Aspekt der Beschreibung betrifft ein Prozessventil umfassend die Antriebseinheit gemäß dem ersten Aspekt.

In der Zeichnung zeigen:
- Figur 1: in einer Seitenansicht eine Antriebseinheit für ein Prozessventil;
- Figuren 2a, 3a und 4a: jeweils einen Schnitt eines distalen Bereichs der Antriebseinheit;
- Figuren 2b, 3b und 4b: jeweils einen schematischen Schnitt des jeweiligen Beispiels aus den Figuren 2a, 3a und 4a;
- Figuren 5 bis 7: jeweils einen Typ eines Adapters.

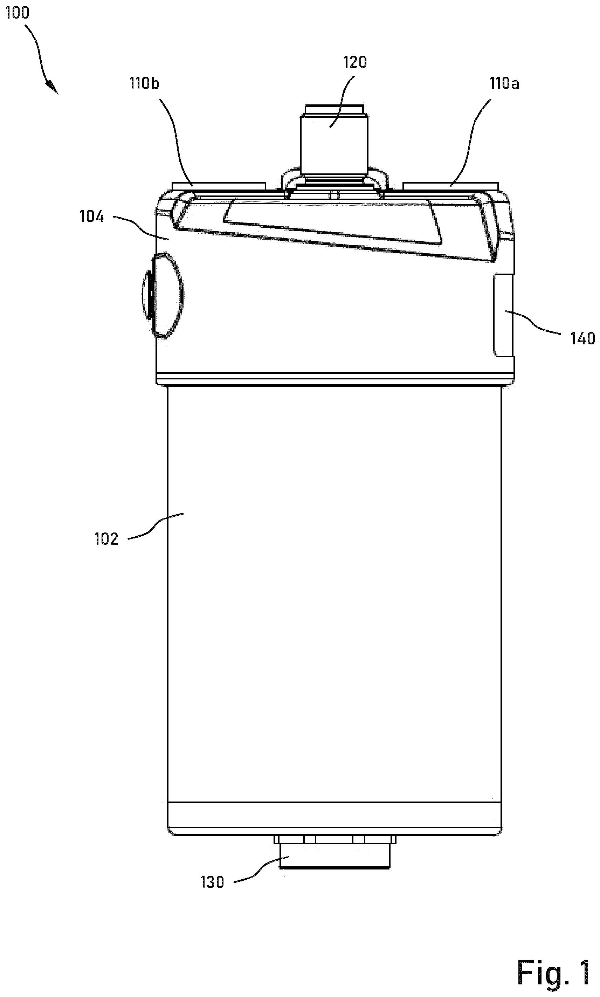

Figur 1 zeigt in einer Seitenansicht eine Antriebseinheit 100 für ein Prozessventil. Ein Antriebsgehäuse 102 umfasst zwei distal am Antriebsgehäuse 102 angeordnete Steuermedium-Anschlüsse, die in der Figur 1 innerhalb eines Zubehörgehäuses angeordnet und nicht sichtbar sind.

Ein Zubehör umfasst das distal an dem Antriebsgehäuse 102 angeordnete Zubehörgehäuse 104, wobei zwei Adapter 110a-b zumindest abschnittsweise in dem Zubehörgehäuse 104 angeordnet ist. Eine Außenkontur des Zubehörgehäuses 104 folgt im Wesentlichen einer gedachten Verlängerung des Antriebsgehäuses 102 oder dessen Formgebung parallel zur Antriebsachse.

Über eine elektrische Schnittstelle 120 wird das Zubehör mit Strom versorgt. Des Weiteren können über die Schnittstelle 120 von dem Zubehör erzeugte Daten, insbesondere Sensorsignale, bereitgestellt werden. Auch kann das Zubehör über die Schnittstelle 120 Daten empfangen.

Über eine mechanische Schnittstelle 130 umfassend ein distales Außengewinde wird das Antriebsgehäuse direkt oder über einen nicht gezeigten Zwischenkörper mit einem nicht gezeigten Ventilkörper verbunden.

An dem Zubehörgehäuse 104 ist eine elektronische Stellungsanzeige 140, beispielsweise umfassend ein Display oder eine Mehrzahl von Halbleiterlichtquellen, angeordnet. Die Stellungsanzeige 140 zeigt eine Ist-Position einer innerhalb des Antriebsgehäuses 102 beweglich angeordneten Antriebsstange an. Hierzu wird die Ist-Position der Antriebsstange mittels eines innerhalb des Zubehörgehäuses 104 angeordneten Sensors ermittelt. Die Ist-Position der Antriebsstange wird beispielsweise mittels eines innerhalb des Zubehörgehäuses 104 angeordneten Mikrocontrollers ausgelesen und über ein umgesetztes Signal an die Stellungsanzeige 140 übermittelt.

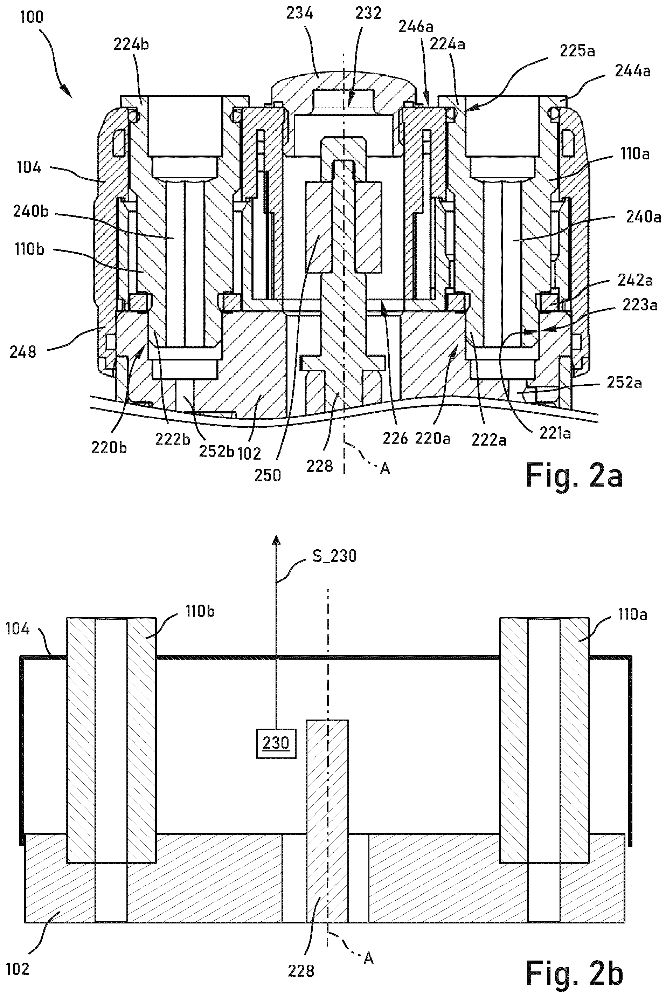

Figur 2a zeigt eine Schnittansicht eines distalen Bereichs der Antriebseinheit 100 und Figur 2b zeigt in einer schematischen Schnittansicht die Antriebseinheit 100 aus Figur 2a. Der jeweilige Adapter 110a-b umfasst einen ersten Steuermedium-Anschluss 222a-b, der mit dem Steuermedium-Anschluss 220a-b des Antriebsgehäuses 104 lösbar verbunden ist. Die Adapter 110a-b legen das Zubehörgehäuse 104 durch die Eindrehung der Adapter 110a-b in den Steuermedium-Abschluss 220a-b zu dem Antriebsgehäuse 102 fest. In anderen Worten erfolgt die Befestigung des Zubehörgehäuses 104 an dem Antriebsgehäuse 102 durch eine Befestigung der Adapter 110a-b an dem Steuermedium-Anschluss 220a-b des Antriebsgehäuses 102 und durch ein Aufdrücken bzw. einen Formschluss zwischen dem Zubehörgehäuse 104 und den Adaptern 110a-b.

Der jeweilige Adapter 110a-b umfasst einen zweiten distal angeordneten Steuermedium-Anschluss 224a-b, der von außerhalb des Zubehörgehäuses 104 zugänglich ist.

Der Steuermedium-Anschluss 222a des Antriebsgehäuses 102 umfasst ein Innengewinde 221a, in welches ein Außengewinde 223a des ersten Steuermedium-Anschlusses 222a eingedreht ist. Der zweite Steuermedium-Anschluss 224a umfasst ein Innengewinde 225a zum Anschluss einer Steuermedium-Leitung. Die Innengewinde 221a und 225a sind gleichartig ausgebildet, womit der Adapter 110a eine Verlagerung des Steuerluftanschlusses 220a bereitstellt.

Ein O-Ring oder eine Dichtung 242a ist zwischen einer den Steuermedium-Anschluss 222a umgebenden Fläche des Antriebsgehäuses 102 und dem Adapter 110a angeordnet und dichtet den Anschlussbereich ab.

Das Zubehörgehäuse 104 stützt sich direkt oder indirekt an dem Antriebsgehäuse 102 ab. Der Adapter 110a umfasst einen Kragen 244a, der beim Eindrehen des Adapters 110a in das Innengewinde 221a auf eine Fläche 246a des Zubehörgehäuses 104 trifft. Der Kragen 244a bildet mit der Fläche 246a einen Formschluss parallel zur Antriebsachse A und legt damit das Zubehörgehäuse 104 zu dem Antriebsgehäuse 102 fest.

Das Zubehörgehäuse 104 umfasst einen umlaufenden Kragen 248, der einen distalen äußeren Abschnitt des Antriebsgehäuses 102 umgibt.

Ausgehend von dem jeweiligen Steuermedium-Anschluss 220a, 220b führt ein jeweiliger Steuermedium-Kanal 252a, 252b innerhalb des Antriebsgehäuses 102 zu einer jeweiligen nicht gezeigten Antriebskammer. Die wenigstens zwei Antriebskammern sind beispielsweise durch einen mit der Antriebsstange 228 verbundenen Antriebskolben oder eine Antriebsmembran voneinander getrennt. Mit der Antriebsstange ist ein Stellmittel wie beispielsweise eine in oder an einem Ventilkörper angeordnete Ventilmembran verbunden.

Das Antriebsgehäuse 102 umfasst eine Öffnung 226, durch welche eine entlang einer Antriebsachse A bewegliche Antriebsstange 228 oder deren Verlängerung hindurchtritt. In dem Zubehörgehäuse 104 ist ein Positionssensor 230 angeordnet, dessen Sensorsignal S_230 eine Ist-Position der Antriebsstange 228 charakterisiert.

Der Positionssensor 230 ist beispielsweise als Hall-Sensor ausgebildet. Das Sensorsignal S_230 ändert sich in Abhängigkeit von der Position eines Dauermagneten 250, der fest mit der Antriebsstange 228 verbunden ist. Selbstverständlich sind auch andere Messprinzipien zur Ermittlung der Position der Antriebsstange 228 anwendbar.

Das Zubehörgehäuse 104 umfasst eine zentrale Öffnung 232, welche mittels einer Verschlusskappe 234 verschließbar ist und/oder durch welche eine Hubbegrenzung, welche an dem Antriebsgehäuse 102 angreift, anordenbar ist. Die Antriebsachse A verläuft durch die zentrale Öffnung 232.

Der Adapter 110a-b eines ersten Typs umfasst einen in seinem Verlauf geschlossenen Steuermedium-Kanal 240a-b, der den ersten und den zweiten Steuermedium-Anschluss 222a-b, 224a-b direkt und fluidführend miteinander verbindet.

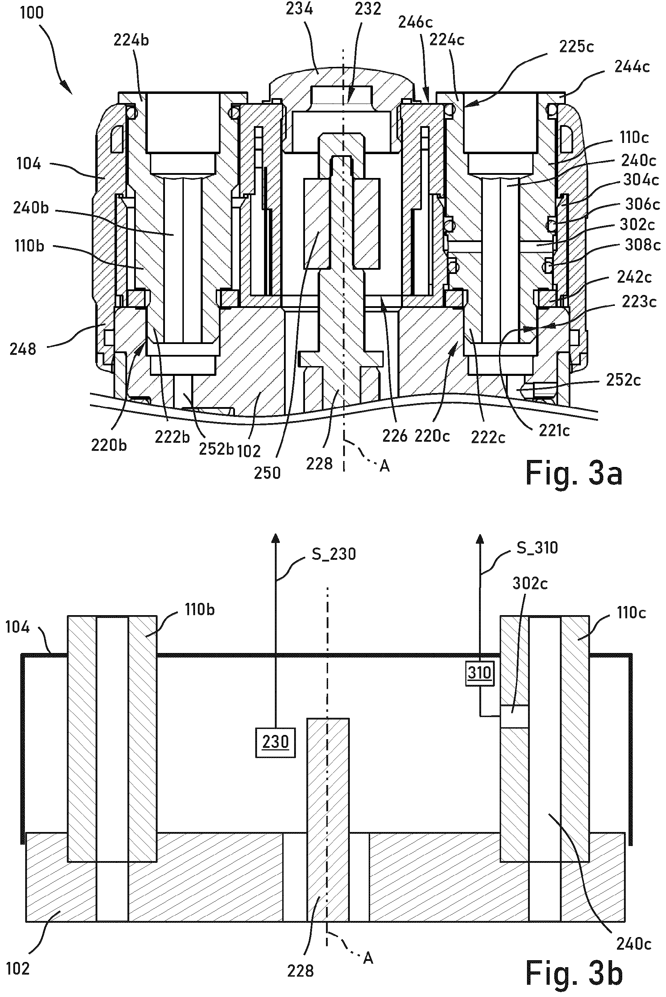

Figur 3a zeigt in einem weiteren Beispiel eine Schnittansicht des distalen Bereichs der Antriebseinheit 100 und Figur 3b zeigt in einer schematischen Schnittansicht die Antriebseinheit 100 aus Figur 3a. Bezüglich der Merkmale mit dem Suffix 'c' wird auf die Beschreibung zu den Figuren 2a und 2b, insbesondere auf die Merkmale mit dem Suffix 'a' verwiesen. Ein Adapter 110c eines zweiten Typs umfasst einen Steuermedium-Kanal 240c, der den ersten und den zweiten Steuermedium-Anschluss 222c, 224c fluidführend miteinander verbindet, wobei ein Mess-Abgriff 302c entlang des Steuermedium-Kanals 240c angeordnet ist. Der Mess-Abgriff 302c ist beispielsweise als Durchgangsbohrung ausgebildet. Der Mess-Abgriff 302c verbindet den Steuermedium-Kanal 240c mit einem Außenraum des Adapters 110c.

Der Adapter 110c ist in einer zylindrisch ausgebildeten und zum Antriebsgehäuse 102 feststehenden Aufnahme 304c aufgenommen. Zwei O-Ringe 306c und 308c sind zu beiden Seiten des Mess-Abgriffs 302c angeordnet und bilden innerhalb der Aufnahme 304c eine jeweilige Dichtung.

Die zwischen den Dichtungen 306c und 308c, dem Adapter 110c sowie einem Teil der Aufnahme 304c gebildete ringförmige Kammer führt in nicht gezeigter Form zu einem Drucksensor 310. Der Drucksensor 310 ist in dem Zubehörgehäuse 104 angeordnet und ist fluidführend mit dem Mess-Abgriff 302c verbunden. Ein Sensorsignal S_310 repräsentiert einen Druck des Steuer-Mediums in dem Steuermedium-Kanal 240c des Adapters 110c.

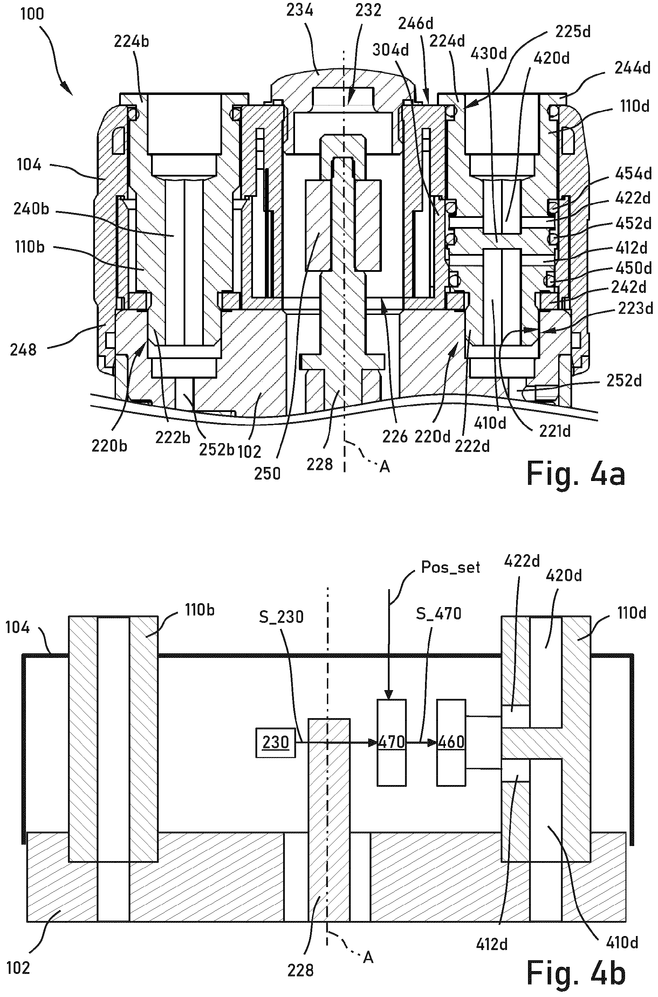

Figur 4a zeigt in einem weiteren Beispiel eine Schnittansicht des distalen Bereichs der Antriebseinheit 100 und Figur 4b zeigt in einer schematischen Schnittansicht die Antriebseinheit 100 aus Figur 4a. Bezüglich der Merkmale mit dem Suffix 'd' wird auf die Beschreibung zu den Figuren 2a bis 3b, insbesondere auf die Merkmale mit dem Suffix 'a' oder 'b' verwiesen. Ein Adapter 110d eines dritten Typs umfasst eine erste Steuermedium-Kammer 410d, welche mit dem ersten Steuermedium-Anschluss 222d und mit einem lateralen ersten Steuer-Abgriff 412d verbunden ist, und eine zweite Steuermedium-Kammer 420d, welche mit dem zweiten Steuermedium-Anschluss 224d und einem lateralen zweiten Steuer-Abgriff 422d verbunden ist. Ein Steg 430d trennt die beiden Steuermedium-Kammern 410d und 420d voneinander.

Der Adapter 110d ist in der zylindrisch ausgebildeten und zum Antriebsgehäuse 102 feststehenden Aufnahme 304d aufgenommen. Drei O-Ringe 450d, 452d und 454d bilden innerhalb der Aufnahme 304d mit dem Adapter 110d eine jeweilige Dichtung.

Die zwischen den O-Ringen 450d, 452d und 454d, dem Adapter 110d sowie einem Teil der Aufnahme 304d gebildete jeweilige ringförmige Kammer führt in nicht gezeigter Form zu einer in dem Zubehörgehäuse 104 angeordneten Stelleinrichtung 460, insbesondere einem Vorsteuerventil. Die Stelleinrichtung 460 begrenzt in Abhängigkeit von einem Stellsignal S_470 einen Fluss des Steuermediums zwischen dem ersten und zweiten Steuer-Abgriff 412d, 422d.

Eine in dem Zubehörgehäuse 104 angeordnete Regeleinrichtung 470 umfasst wenigstens einen Prozessor und wenigstens eine mit dem Prozessor verbundene Speichereinheit. Die Regeleinrichtung 470 ist beispielsweise mittels eines auf der Speichereinheit abgespeicherten und auf dem Prozessor lauffähigen Computerprogrammprodukt dazu eingerichtet, das Stellsignal S_470 in Abhängigkeit von der Ist-Position der Antriebsstange 228 und in Abhängigkeit von einer dem Zubehör bzw. der Antriebseinheit 100 zugeführten Soll-Position Pos_set zu ermitteln.

Eine innerhalb des Zubehörgehäuses 104 angeordnete Aufnahme 304d umgibt den Adapter 110d zumindest abschnittsweise. Dichtelemente, beispielsweise in Form der bereits erläuterten O-Ringe aus einem Elastomer, und die Aufnahme 304d begrenzen mit dem Adapter 110d eine jeweilige Kammer, in welche ein jeweiliger der Steuer-Abgriffe 412d, 422d führt.

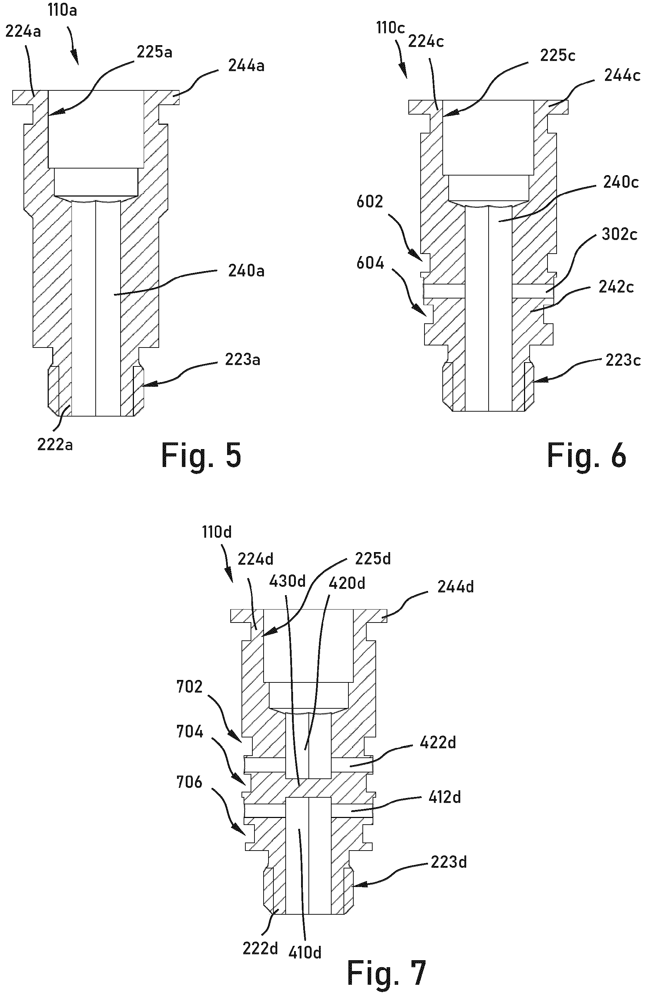

Die Figuren 5, 6 und 7 zeigen die drei verschiedenen Typen von Adaptern 110a, 110c und 110d, die in den Figuren 2a bis 4a zum Einsatz kommen.

Umfangsnuten 602, 604 in Figur 6 sind beabstandet zueinander und nehmen die O-Ringe zur Bildung der ringförmigen Kammer auf. Zwischen den Umfangsnuten 602, 604 sind Öffnungen von Radialbohrungen angeordnet, die einen jeweiligen der Mess-Abgriffe 302c bilden. Selbstverständlich kann das Prinzip auch umgekehrt werden: O-Ringe sind in Nuten des Zubehörgehäuses aufgenommen und ein taillierter Adapter ist im Zubehörgehäuse angeordnet.

Umfangsnuten 702, 704, 706 in Figur 7 sind beabstandet zueinander und nehmen die O-Ringe zur Bildung der jeweiligen ringförmigen Kammer auf. Die Steuerabgriffe 412d und 422d sind paarweise von den Umfangsnuten 702, 704, 706 umgeben.

## Patentansprüche

1. Eine Antriebseinheit (100) für ein Prozessventil umfassend:
ein Antriebsgehäuse (102) mit wenigstens einem Steuermedium-Anschluss (220a-b); und
ein Zubehörgehäuse (104), wobei wenigstens ein Adapter (110a-d) zumindest abschnittsweise in dem Zubehörgehäuse (104) angeordnet ist, wobei der wenigstens eine Adapter (110a-d) einen ersten Steuermedium-Anschluss (222a-d), der mit dem wenigstens einen Steuermedium-Anschluss (220a-b) des Antriebsgehäuses (104) verbunden ist, umfasst, und wobei der wenigstens eine Adapter (110a-d) das Zubehörgehäuse (104) zu dem Antriebsgehäuse (102) festlegt , **dadurch gekennzeichnet, dass** der wenigstens eine Adapter (110a-d) einen zweiten Steuermedium-Anschluss (224a-d), der von außerhalb des Zubehörgehäuses (104) zugänglich ist, umfasst.

2. Die Antriebseinheit (100) gemäß dem Anspruch 1, wobei das Antriebsgehäuse (102) eine Öffnung (226) umfasst, durch welche eine entlang einer Antriebsachse (A) bewegliche Antriebsstange (228) oder deren Verlängerung hindurchtritt, und wobei in dem Zubehörgehäuse (104) ein Positionssensor (230) angeordnet ist, dessen Sensorsignal (S_230) eine Ist-Position der Antriebsstange (228) charakterisiert.

3. Die Antriebseinheit (100) gemäß dem Anspruch 1 oder 2, wobei das Zubehörgehäuse (104) eine zentrale Öffnung (232), welche mittels einer Verschlusskappe (234) verschließbar ist und/oder durch welche eine Hubbegrenzung, welche an dem Antriebsgehäuse (102) angreift, anordenbar ist, umfasst.

4. Die Antriebseinheit (100) gemäß einem der vorigen Ansprüche, wobei der wenigstens eine Adapter (110a-b) einen Steuermedium-Kanal (240a-b) umfasst, der den ersten und den zweiten Steuermedium-Anschluss (222ab, 224a-b) miteinander verbindet.

5. Die Antriebseinheit (100) gemäß einem der vorigen Ansprüche, wobei der wenigstes eine Adapter (110c) einen Steuermedium-Kanal (240c) umfasst, der den ersten und den zweiten Steuermedium-Anschluss (222c, 224c) miteinander verbindet, und wobei der wenigstens eine Adapter (110c) einen Mess-Abgriff (302c) entlang des Steuermedium-Kanals (240c) umfasst.

6. Die Antriebseinheit (100) gemäß dem vorigen Anspruch, wobei ein Drucksensor (310) in dem Zubehörgehäuse (104) angeordnet ist, welcher fluidführend mit dem Mess-Abgriff (302c) verbunden ist und dessen Sensorsignal (S_310) einen Druck des Steuer-Mediums in dem Steuermedium-Kanal (240c) des Adapters (110c) repräsentiert.

7. Die Antriebseinheit (100) gemäß einem der vorigen Ansprüche, wobei der wenigstens eine Adapter (110d) eine erste Steuermedium-Kammer (410d), welche mit dem ersten Steuermedium-Anschluss (222d) und mit einem lateralen ersten Steuer-Abgriff (412d) verbunden ist, und eine zweite Steuermedium-Kammer (420d), welche mit dem zweiten Steuermedium-Anschluss (224d) und einem lateralen zweiten Steuer-Abgriff (422d) verbunden ist, umfasst.

8. Die Antriebseinheit (100) gemäß dem vorigen Anspruch, wobei eine in dem Zubehörgehäuse (104) angeordnete Stelleinrichtung (460), insbesondere ein Vorsteuerventil, in Abhängigkeit von einem Stellsignal (S_470) einen Fluss des Steuermediums zwischen dem ersten und zweiten Steuer-Abgriff (412d, 422d) begrenzt.

9. Die Antriebseinheit (100) gemäß dem vorigen Anspruch, wobei eine in dem Zubehörgehäuse (104) angeordnete Regeleinrichtung (470) dazu eingerichtet ist, das Stellsignal (S_470) in Abhängigkeit von der Ist-Position der Antriebsstange (228) und in Abhängigkeit von einer Soll-Position (Pos_set) zu ermitteln.

10. Die Antriebseinheit (100) gemäß einem der vorigen Ansprüche, wobei eine innerhalb des Zubehörgehäuses (104) angeordnete Aufnahme (304c, 304d) den wenigstens eine Adapter (110c, 110d) zumindest abschnittsweise umgibt, und wobei Dichtelemente und die Aufnahme (304c, 304d) mit dem wenigstens einen Adapter (110c, 110d) wenigstens eine Kammer begrenzen, in welche der Mess-Abgriff (302c) oder ein jeweiliger der Steuer-Abgriffe (412d, 422d) führt.

11. Die Antriebseinheit (100) gemäß einem der vorigen Ansprüche, wobei an dem Zubehörgehäuse (104) eine elektronische Stellungsanzeige (140), beispielsweise umfassend ein Display oder eine Mehrzahl von Halbleiterlichtquellen, angeordnet ist, welche die Ist-Position der Antriebsstange (228) anzeigt.

12. Die Antriebseinheit (100) gemäß einem der vorigen Ansprüche, wobei das Zubehörgehäuse (104) distal an dem Antriebsgehäuse (102) angeordnet ist.

13. Die Antriebseinheit (100) gemäß einem der vorigen Ansprüche, wobei eine Außenkontur des Zubehörgehäuses (104) einer gedachten Verlängerung des Antriebsgehäuses (102) oder dessen Formgebung parallel zur Antriebsachse (A) im Wesentlichen folgt.

14. Die Antriebseinheit (100) gemäß einem der vorigen Ansprüche, die wenigstens zwei Adapterelemente (110a-d) umfasst.

15. Ein Prozessventil umfassend die Antriebseinheit (100) gemäß einem der vorigen Ansprüche.

## Claims

1. A drive unit (100) for a process valve, comprising:
a drive housing (102) having at least one control medium connection (220a-b); and
an accessory housing (104), at least one adapter (110a-d) being arranged at least partially in the accessory housing (104), the at least one adapter (110a-d) comprising a first control medium connection (222a-d) which is connected to the at least one control medium connection (220a-b) of the drive housing (104), and the at least one adapter (110a-d) securing the accessory housing (104) to the drive housing (102),
**characterized in that** the at least one adapter (110a-d) comprises a second control medium connection (224a-d) which is accessible from outside the accessory housing (104).

2. The drive unit (100) according to claim 1, wherein the drive housing (102) comprises an opening (226) through which a drive rod (228) or its extension, which is movable along a drive axis (A), passes, and wherein a position sensor (230) is arranged in the accessory housing (104), the sensor signal (S_230) of which characterizes an actual position of the drive rod (228).

3. The drive unit (100) according to claim 1 or claim 2, wherein the accessory housing (104) comprises a central opening (232) which can be closed by means of a closure cap (234) and/or through which a stroke limiter can be arranged which engages with the drive housing (102).

4. The drive unit (100) according to any of the preceding claims, wherein the at least one adapter (110a-b) comprises a control medium channel (240a-b) which connects the first and the second control medium connection (222a-b, 224a-b) to one another.

5. The drive unit (100) according to any of the preceding claims, wherein the at least one adapter (110c) comprises a control medium channel (240c) which connects the first and the second control medium connection (222c, 224c) to one another, and wherein the at least one adapter (110c) comprises a measuring tap (302c) along the control medium channel (240c).

6. The drive unit (100) according to the preceding claim, wherein a pressure sensor (310) is arranged in the accessory housing (104) and is fluidically connected to the measuring tap (302c), and the sensor signal (S_310) of which represents a pressure of the control medium in the control medium channel (240c) of the adapter (110c).

7. The drive unit (100) according to any of the preceding claims, wherein the at least one adapter (110d) comprises a first control medium chamber (410d) connected to the first control medium connection (222d) and to a lateral first control tap (412d), and a second control medium chamber (420d) connected to the second control medium connection (224d) and to a lateral second control tap (422d).

8. The drive unit (100) according to the preceding claim, wherein an actuating device (460), in particular a pilot control valve, arranged in the accessory housing (104) limits a flow of the control medium between the first and the second control tap (412d, 422d) on the basis of an actuating signal (S_470).

9. The drive unit (100) according to the preceding claim, wherein a regulating device (470) arranged in the accessory housing (104) is configured to determine the actuating signal (S_470) on the basis of the actual position of the drive rod (228) and on the basis of a target position (Pos_set).

10. The drive unit (100) according to any of the preceding claims, wherein a receptacle (304c, 304d) arranged inside the accessory housing (104) at least partially surrounds the at least one adapter (110c, 110d), and wherein sealing elements and the receptacle (304c, 304d) with the at least one adapter (110c, 110d) delimit at least one chamber into which the measuring tap (302c) or one of the control taps (412d, 422d) leads.

11. The drive unit (100) according to any of the preceding claims, wherein an electronic position indicator (140), for example comprising a display or a plurality of semiconductor light sources, is arranged on the accessory housing (104) and indicates the actual position of the drive rod (228).

12. The drive unit (100) according to any of the preceding claims, wherein the accessory housing (104) is arranged distally on the drive housing (102).

13. The drive unit (100) according to any of the preceding claims, wherein an outer contour of the accessory housing (104) substantially follows an imaginary extension of the drive housing (102) or its shape parallel to the drive axis (A).

14. The drive unit (100) according to any of the preceding claims, comprising at least two adapter elements (110a-d).

15. A process valve comprising the drive unit (100) according to any of the preceding claims.

## Revendications

1. Unité d'entraînement (100) pour une soupape de processus, comprenant:
un boîtier d'entraînement (102) doté d'au moins un raccord de milieu de commande (220a-b) ; et
un boîtier d'accessoires (104), dans lequel au moins un adaptateur (110a-d) est disposé au moins par sections dans ledit boîtier d'accessoires (104), dans lequel ledit au moins un adaptateur (110a-d) comprend un premier raccord de milieu de commande (222a-d) qui est relié audit au moins un raccord de milieu de commande (220a-b) du boîtier d'entraînement (104), et dans lequel ledit au moins un adaptateur (110a-d) fixe le boîtier d'accessoires (104) par rapport au boîtier d'entraînement (102),
**caractérisée par le fait que** ledit au moins un adaptateur (110a-d) comprend un deuxième raccord de milieu de commande (224a-d) qui est accessible depuis l'extérieur du boîtier d'accessoires (104).

2. Unité d'entraînement (100) selon la revendication 1, dans laquelle le boîtier d'entraînement (102) comprend une ouverture (226) qui est traversée par une tige d'entraînement (228) ou son prolongement, qui est mobile le long d'un axe d'entraînement (A), et dans laquelle un capteur de position (230) est disposé dans le boîtier d'accessoires (104), dont le signal de capteur (S_230) caractérise une position réelle de la tige d'entraînement (228).

3. Unité d'entraînement (100) selon la revendication 1 ou 2, dans laquelle le boîtier d'accessoires (104) comprend une ouverture centrale (232) qui peut être fermée par un capuchon de fermeture (234) et/ou à travers laquelle peut être disposé un limiteur de course qui s'engage sur le boîtier d'entraînement (102).

4. Unité d'entraînement (100) selon l'une quelconque des revendications précédentes, dans laquelle ledit au moins un adaptateur (110a-b) comprend un canal de milieu de commande (240a-b) qui relie les premier et deuxième raccords de milieu de commande (222a-b, 224a-b).

5. Unité d'entraînement (100) selon l'une quelconque des revendications précédentes, dans laquelle ledit au moins un adaptateur (110c) comprend un canal de milieu de commande (240c) qui relie les premier et deuxième raccords de milieu de commande (222c, 224c) entre eux, et dans laquelle ledit au moins un adaptateur (110c) comprend une prise de mesure (302c) le long du canal de milieu de commande (240c).

6. Unité d'entraînement (100) selon la revendication précédente, dans laquelle un capteur de pression (310) est disposé dans le boîtier d'accessoires (104), lequel est relié fluidiquement à la prise de mesure (302c), et dont le signal de capteur (S_310) représente une pression du milieu de commande dans le canal de milieu de commande (240c) de l'adaptateur (110c).

7. Unité d'entraînement (100) selon l'une quelconque des revendications précédentes, dans laquelle ledit au moins un adaptateur (110d) comprend une première chambre de milieu de commande (410d) qui est reliée au premier raccord de milieu de commande (222d) et à une première prise de commande latérale (412d), et une deuxième chambre de milieu de commande (420d) qui est reliée au deuxième raccord de milieu de commande (224d) et à une deuxième prise de commande latérale (422d).

8. Unité d'entraînement (100) selon la revendication précédente, dans laquelle un dispositif de réglage (460), en particulier une vanne pilote, disposé dans le boîtier d'accessoires (104), limite un débit du milieu de commande entre les première et deuxième prises de commande (412d, 422d) en fonction d'un signal de réglage (S_470).

9. Unité d'entraînement (100) selon la revendication précédente, dans laquelle un dispositif de réglage (470) disposé dans le boîtier d'accessoires (104) est configuré pour déterminer le signal de réglage (S_470) en fonction de la position réelle de la tige d'entraînement (228) et en fonction d'une position de consigne (Pos_set).

10. Unité d'entraînement (100) selon l'une quelconque des revendications précédentes, dans laquelle un logement (304c, 304d) disposé à l'intérieur du boîtier d'accessoires (104) entoure au moins par sections ledit au moins un adaptateur (110c, 110d), et dans laquelle des éléments d'étanchéité et le logement (304c, 304d) délimitent conjointement avec ledit au moins un adaptateur (110c, 110d) au moins une chambre dans laquelle débouche la prise de mesure (302c) ou une prise de commande respective desdits prises de commande (412d, 422d).

11. Unité d'entraînement (100) selon l'une quelconque des revendications précédentes, dans laquelle un indicateur de position électronique (140), comprenant par exemple un écran ou une pluralité de sources lumineuses à semiconducteurs, est disposé sur le boîtier d'accessoires (104), lequel indique la position réelle de la tige d'entraînement (228).

12. Unité d'entraînement (100) selon l'une quelconque des revendications précédentes, dans laquelle le boîtier d'accessoires (104) est disposé distalement sur le boîtier d'entraînement (102).

13. Unité d'entraînement (100) selon l'une quelconque des revendications précédentes, dans laquelle un contour extérieur du boîtier d'accessoires (104) suit pour l'essentiel un prolongement imaginaire du boîtier d'entraînement (102) ou sa forme parallèle à l'axe d'entraînement (A).

14. Unité d'entraînement (100) selon l'une quelconque des revendications précédentes, comprenant au moins deux éléments adaptateurs (110a-d).

15. Soupape de processus comprenant l'unité d'entraînement (100) selon l'une quelconque des revendications précédentes.
